# EUROPÄISCHE PATENTSCHRIFT

(11) **EP 1 965 962 B1**
(45) Veröffentlichungstag und Bekanntmachung des Hinweises auf die Patenterteilung: **19.03.2014**
(21) Anmeldenummer: 06830535.8
(22) Anmeldetag: 12.12.2006
(51) Int. Cl.: B29C 45/14, F16B 37/12

(54) **EINLEGETEIL SOWIE SPRITZGUSSTEIL MIT EINLEGETEIL**
INSERT AND INJECTION MOULDING WITH INSERT
INSERT ET PIECE MOULEE PAR INJECTION DOTEE D'UN INSERT

(30) Priorität: 23.12.2005 DE 102005061889
(43) Veröffentlichungstag der Anmeldung: 10.09.2008
(73) Patentinhaber: ROBERT BOSCH GMBH, 70442 Stuttgart (DE)
(72) Erfinder: FUERTSCH, Matthias, 72810 Gomaringen (DE); MUELLER, Lutz, 72631 Aichtal (DE); STOLPMANN, Dagmar, 75385 Bad Teinach-Zavelstein (DE)
(86) Internationale Anmeldenummer: PCT/EP2006/069569
(87) Internationale Veröffentlichungsnummer: WO 2007/074051

(56) Entgegenhaltungen:
- FR-A1- 2 783 746
- US-A1- 4 949 571
- US-A1- 2005 143 208
- DATABASE WPI Week 197419 Derwent Publications Ltd., London, GB; AN 1974-35480V XP002425037 -& JP 49 009095 B (JAPAN STEEL WORKS LTD) 1. März 1974 (1974-03-01)

## Beschreibung

### Stand der Technik

Die Erfindung geht aus von einem Einlegeteil in ein Spritzgussteil nach dem Oberbegriff des Anspruchs 1 und einem Spritzgussteil mit einem Einlegeteil nach dem Oberbegriff des Anspruchs 12.

Gehäuse, die z.B. für Sensoren in Kraftfahrzeugen eingesetzt werden, werden üblicherweise angeschraubt. Damit das Gehäuse durch die Vorspannkraft der Schraube dabei nicht zerdrückt wird, kommen in das Gehäuse eingespritzte, krafteinleitende Befestigungsbuchsen zum Einsatz siehe z.B. US-A-4 949 571. Diese sind als zylindrische Rohrabschnitte ausgebildet und leiten die Spannung der Befestigungsschrauben in das Gehäuse ein. Üblicherweise sind die Befestigungsbuchsen aus Metallen wie Messing, Aluminium, Edelstahl, verzinktem Stahl und dergl. gefertigt.

Bekannt ist, die Befestigungsbuchsen mit polymerem Gehäusewerkstoff zu umspritzen, was einer typischen Fertigungsart von Sensorgehäusen entspricht. Häufig wird als Gehäusewerkstoff PBT (Polybutylenterephtalat) eingesetzt.

Bei Belastung der Befestigungsbuchsen mit korrosiven Medien, z.B. Salzsprühnebel, tritt Korrosion auf, die den Gehäusewerkstoff schädigen kann. Sind Befestigungsbuchse und Schraube aus verschiedenen Metallen gefertigt, tritt zusätzlich eine Lokalelementkorrosion auf. Diese kann zwar durch eine elektrische Isolation der Metallteile voneinander vermieden werden, es kann jedoch immer noch eine Spaltkorrosion auftreten, da die Befestigungsbuchse vom Gehäusewerkstoff nicht völlig spaltfrei umschlossen wird. Die Spaltkorrosion tritt auch bei gleichartigen Werkstoffen von Befestigungsbuchse und Schraube auf. Die Korrosionsprodukte beider Korrosionsarten können den Gehäusewerkstoff schädigen.

### Vorteile der Erfindung

Es wird ein Einlegeteil in ein Spritzgussteil vorgeschlagen, insbesondere eine Befestigungsbuchse zum Aufnehmen eines Befestigungsmittels in einer Aufnahmeöffnung, bei dem wenigstens dessen äußere Oberfläche eine metallische erste Korrosionsschutzschicht aufweist, auf der eine Versiegelungsschicht abgeschieden ist. Bei einem metallischen Einlegeteil in Form einer Befestigungsbuchse sind eine hohe Druckfestigkeit durch die metallische Befestigungsbuchse und ein guter Korrosionsschutz durch die Korrosionsschutzschicht gegeben. Ist die Befestigungsbuchse in einem Sensorgehäuse vorgesehen, kann eine stabile Befestigung erreicht werden, ohne dass das Gehäuse beschädigt wird. Die Befestigungsbuchse ist bevorzugt aus Stahl gebildet. Die Versiegelungsschicht erhöht den Korrosionsschutz weiter und kann etwaige Delaminationsspalte zwischen dem Einlegeteil und dem Spritzgussmaterial verringern. Gleichzeitig dient die Versiegelungsschicht der elektrischen Isolation des Einlegeteils. Lokalelementkorrosion wie auch Spaltkorrosion können dadurch vermieden werden.

In einer günstigen Ausgestaltung ist als Versiegelungsschicht eine Lackschicht vorgesehen.

In einer besonders günstigen Ausgestaltung ist die Lackschicht eine kathodische Tauchlackierungsschicht (kataphoretischer Tauchlack) mit einem KTL-Lack. In einer besonders vorteilhaften Kombination mit einer Zn-Schicht und insbesondere einer ZnNi-Schicht bietet das System der zwei Beschichtungen einen erhöhten Korrosionsschutz. Besonders beim Umspritzen des beschichteten Einlegeteils mit einem Polymerwerkstoff, insbesondere einem Gehäusewerkstoff wie Polyamid oder Polybutylenterephtalat zeigt sich eine besonders gute Haftung zwischen dem Spritzgusswerkstoff und dem KTL-Lack. Dadurch wird ein etwaiger Delaminationsspalt zwischen Einlegeteil und Spritzgusswerkstoff noch besser abgedichtet.

Alternativ kann die Versiegelungsschicht eine Schicht auf silikatischer oder organosilikatischer Basis sein. Vorzugsweise weist die Versiegelungsschicht eine Schichtdicke von mehr als 0,5 µm, vorzugsweise mindestens 1 µm auf. Ferner weist die Versiegelungsschicht eine ausreichende Temperaturstabilität auf, die während der Einwirkung erhöhter Temperaturen beim Spritzgießen mit dem Polymerwerkstoff gewährleistet, dass die Versiegelungsschicht nicht degradiert. Nach dem Umspritzen ist die Versiegelungsschicht weiterhin vorhanden und gewährleistet eine erhöhte Stabilität gegenüber Lokalelement- und Spaltkorrosion.

In einer günstigen Ausgestaltung weist das Einlegeteil einen hülsenförmigen Körper auf, der an seiner inneren und äußeren Oberfläche von der Korrosionsschutzschicht und der darauf abgeschiedenen Versiegelungsschicht umgeben ist. Die beiden Schichten sind ebenso auf den Stirnseiten abgeschieden, so dass durch die vollständige Kapselung des Körpers ein Korrosionsangriff weitgehend unterbunden werden kann. Das Einlegeteil kann ein Innengewinde aufweisen, mit dem das Einlegeteil und damit verbundene Umhüllungen, z.B. ein Spritzgussgehäuse, direkt an einen Träger, z.B. eine Fahrzeugkarosserie, geschraubt werden kann.

In einer günstigen Ausgestaltung ist die Korrosionsschutzschicht eine Zn-Schicht. Besonders günstig ist die Korrosionsschutzschicht eine ZnNi-Schicht. Diese lassen sich vorteilhaft galvanisch auftragen, so dass das metallische Einlegeteil mit einem dichten und gut haftenden Überzug der Korrosionsschicht überzogen werden kann. Besonders ZnNi bildet gegen aggressive Medien wie Salzsprühnebel einen guten Schutz.

In einer günstigen Weiterbildung ist das Einlegeteil zumindest mit seinem hülsenförmigen Körper verdrehsicher ausgebildet. Beim Einschrauben einer Schraube in das Einlegeteil ist dieses gegen ein Durchrutschen im Spritzgusswerkstoff gesichert. Vorteilhaft weist der hülsenförmige Körper im Querschnitt ein Mehrkantprofil, bevorzugt ein Sechskantprofil, auf. Ebenso kann der hülsenförmige Körper im Querschnitt ein Rändelprofil aufweisen. Dadurch, dass beim Anziehen z.B. einer Befestigungsschraube ein Durchrutschen des Einlegeteils verhindert wird, bleibt die Haftung zwischen der Versiegelungsschicht und dem Spritzgusswerkstoff erhalten. Ein nachträgliches Auftreten von Korrosion auslösenden Spalten an der Grenzschicht zwischen Versiegelungsschicht und Spritzgusswerkstoff beim Einbau des Spritzgussteils, z.B. als Sensorgehäuse in ein Fahrzeug, wird verhindert. Besonders bei der Verwendung im Fahrzeugbereich kann damit ein anschraubbares Spritzgussgehäuse mit integrierter Befestigungsbuchse geschaffen werden, das bei hoher thermischer und mechanischer Beanspruchung resistent gegen Korrosion ist und damit verbaute Sensoren im Fahrzeug vorteilhaft schützt.

Es wird auch ein Spritzgussteil mit einem Einlegeteil vorgeschlagen, wobei das Einlegeteil insbesondere als Befestigungsbuchse zum Aufnehmen eines Befestigungsmittels in einer Aufnahmeöffnung ausgebildet ist. Das Einlegeteil weist wenigstens an der äußeren Oberfläche eine metallische erste Korrosionsschutzschicht auf, auf der eine Versiegelungsschicht abgeschieden ist.

In einer günstigen Ausgestaltung ist das mit Korrosionsschutzschicht und Versiegelungsschicht beschichtete Einlegeteil mit wenigstens einem Werkstoff aus der Gruppe Polybutylenterephtalat, Polyamid und/oder glasfasergefülltem Polymer umspritzt. Vorzugsweise ist die Korrosionsschutzschicht als galvanisch aufgetragene Zn-Schicht oder eine Schicht aus einer ZnNi-Legierung gebildet und die Versiegelungsschicht als KTL-Lack kathodisch oder als Schicht auf Silikatbasis mittels Tauchbeschichtung aufgetragen. Das Einlegeteil kann vorteilhaft einen verdrehsicheren Querschnitt aufweisen.

Weiterhin hat das Spritzgussteil eine ansprechende Optik, da sowohl der Spritzgusswerkstoff als auch das mit KTL-Lack beschichtete Einlegeteil in der Regel, insbesondere mit einer ZnNi-Korrosionsschutzschicht, schwarz gefärbt sind.

Bevorzugt ist eine Ausgestaltung des Spritzgussteils als Gehäuse mit integrierter Befestigungsbuchse. Eine bevorzugte Anwendung des Spritzgussteils ist die eines automotivefähigen Sensorgehäuses.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von einem in einer Zeichnung dargestellten Ausführungsbeispiel der Erfindung.

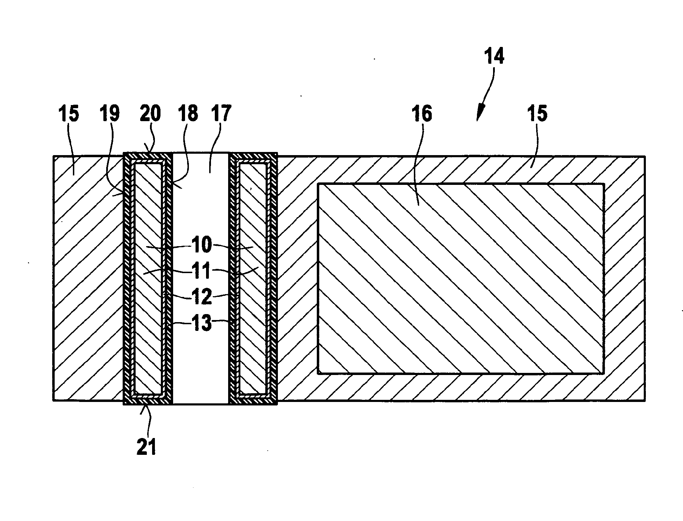

Im Folgenden zeigt die Figur einen Schnitt durch ein bevorzugtes, als Gehäuse ausgebildetes Spritzgussteil mit einem integrierten bevorzugten Einlegeteil.

### Beschreibung des Ausführungsbeispiels

Die Figur zeigt schematisch einen Schnitt durch ein beispielhaftes Spritzgussteil 14, das als Gehäuse für einen Sensor 16 dient, der z.B. in einem Kraftfahrzeug angeschraubt werden soll. Zur Befestigung ist ein als Befestigungsbuchse ausgebildetes Einlegeteil 10 vorgesehen, das einen hülsenförmigen Körper 11 aufweist, der bevorzugt metallisch und z.B. aus Stahl gebildet ist. Der hülsenförmige Körper 11 ist günstigerweise verdrehsicher ausgebildet, z.B. mit einem Querschnitt als Sechskant oder Rändel.

Zum Aufnehmen eines z.B. als Schraube ausgebildeten, nicht dargestellten Befestigungsmittels weist das Einlegeteil 10 eine Aufnahmeöffnung 17 auf. An seiner inneren und äußeren Oberfläche 18, 19 sowie seinen oberen und unteren Stirnseiten 20, 21 ist der hülsenförmige Körper 11 mit einer metallischen Korrosionsschutzschicht 12 beschichtet, auf der eine Versiegelungsschicht 13, vorzugsweise eine Lackschicht 13', oder z.B. auf silikatischer Basis, abgeschieden ist. Die Lackschicht 13' ist vorzugsweise eine KTL-Schicht, die durch ein kathodisches Tauchlackierungsverfahren aufgebracht ist.

Bevorzugt ist die erste Korrosionsschutzschicht 12 eine Zn-Schicht, besonders bevorzugt eine ZnNi-Legierungsschicht. Eine zweckmäßige Dicke liegt z.B. bei einigen Mikrometern. Diese Korrosionsschutzschicht 12 wird bevorzugt galvanisch auf übliche Weise aufgebracht. Gegebenenfalls kann auch eine Passivierungsschicht auf der Korrosionsschutzschicht 12 abgeschieden sein. Das Einlegeteil 10 wird dann mit der Versiegelungsschicht 13 beschichtet und anschließend mit einem Polymer umspritzt.

Die Versiegelungsschicht 13 kann vorzugsweise als silikatische Schicht mittels einer Tauchbeschichtung aufgebracht werden. Die Versiegelungsschicht 13 ist temperaturbeständig und sollte eine ausreichende Dicke aufweisen, vorzugsweise mindestens 0,5 µm, besonders bevorzugt mindestens 1 µm, um beim anschließenden Spritzgießen eine Degradation der Versiegelungsschicht 13 zu vermeiden. Eine Lackschicht 13' kann als Versiegelungsschicht 13 vorzugsweise kathodisch abgeschieden werden (KTL-Schicht).

Das Einlegeteil 10 wird dazu in ein Spritzgusswerkzeug gelegt und mit einem polymeren Spritzgusswerkstoff 15 umspritzt, z.B. PBT. PBT haftet sehr gut an der KTL-Schicht und schmilzt diese an. Hierdurch werden mögliche Delaminationsspalte zwischen dem Spritzgusswerkstoff 15 und dem Einlegeteil 10 bzw. dessen Lackschicht 13 minimiert. Das umspritzte Einlegeteil 10 kann dann mit dem evtl. ebenfalls umspritzten Sensor 16 zusammengefügt werden, bevorzugt durch Spritzen, oder Sensor 16 und Einlegeteil 10 werden gemeinsam im Spritzgusswerkzeug gleichzeitig umspritzt, um ein Spritzgussgehäuse mit integrierter Einlegebuchse zu bilden.

## Patentansprüche

1. Einlegeteil in ein Spritzgussteil (14), insbesondere Befestigungsbuchse zum Aufnehmen eines Befestigungsmittels in einer Aufnahmeöffnung (17), mit wenigstens einer äußeren Oberfläche (19), **dadurch gekennzeichnet, dass** wenigstens die äußere Oberfläche (19) eine metallische Korrosionsschutzschicht (12) aufweist, auf der eine Versiegelungsschicht (13) abgeschieden ist.

2. Einlegeteil nach Anspruch 1, **dadurch gekennzeichnet, dass** die Versiegelungsschicht (13) eine Schicht auf silikatischer oder organosilikatischer Basis ist.

3. Einlegeteil nach Anspruch 2, **dadurch gekennzeichnet, dass** die Versiegelungsschicht (13) eine Schichtdicke von mehr als 0,5 µm, vorzugsweise mindestens 1 µm ist.

4. Einlegeteil nach Anspruch 1, **dadurch gekennzeichnet, dass** wenigstens als Versiegelungsschicht (13) eine Lackschicht (13') vorgesehen ist.

5. Einlegeteil nach einem der vorhergehenden Ansprüche, **dadurch gekennzeichnet, dass** das Einlegeteil einen hülsenförmigen Körper (11) aufweist, der an seiner inneren und äußeren Oberfläche (18, 19) von der Korrosionsschutzschicht (12) und der Versiegelungsschicht (13) umgeben ist

6. Einlegeteil nach Anspruch 4 oder 5, **dadurch gekennzeichnet, dass** die Lackschicht (13') eine kathodische Tauchlackierungsschicht ist.

7. Einlegeteil nach einem der vorhergehenden Ansprüche, **dadurch gekennzeichnet, dass** die Korrosionsschutzschicht (12) eine ZnNi-Schicht ist.

8. Einlegeteil nach einem der vorhergehenden Ansprüche, **dadurch gekennzeichnet, dass** die Korrosionsschutzschicht (12) eine Zn-Schicht ist.

9. Einlegeteil nach einem der vorhergehenden Ansprüche, **dadurch gekennzeichnet, dass** zumindest der hülsenförmige Körper (11) verdrehsicher ausgebildet ist.

10. Einlegeteil nach Anspruch 9, **dadurch gekennzeichnet, dass** der hülsenförmige Körper (11) im Querschnitt ein Mehrkantprofil aufweist.

11. Einlegeteil nach Anspruch 9 oder 10, **dadurch gekennzeichnet, dass** der hülsenförmige Körper (11) im Querschnitt ein Rändelprofil aufweist.

12. Spritzgussteil mit einem Einlegeteil (10), insbesondere einer Befestigungsbuchse zum Aufnehmen eines Befestigungsmittels in einer Aufnahmeöffnung (17), mit wenigstens einer äußeren Oberfläche (18, 19), **dadurch gekennzeichnet, dass** das Einlegeteil (10) wenigstens an der äußeren Oberfläche (19) eine metallische erste Korrosionsschutzschicht (12) aufweist, auf der eine Versiegelungsschicht (13) abgeschieden ist.

13. Spritzgussteil nach Anspruch 12, **dadurch gekennzeichnet, dass** das mit Korrosionsschutzschicht (12) und Versiegelungsschicht (13) beschichtete Einlegeteil (10) mit wenigstens einem Werkstoff aus der Gruppe Polybutylenterephtalat, Polyamid und/oder glasfasergefülltem Polymer umspritzt ist.

14. Spritzgussteil nach Anspruch 12 oder 13, **gekennzeichnet durch** eine Ausgestaltung als Gehäuse (14) mit integrierter Befestigungsbuchse.

15. Verwendung eines Spritzgussteils nach einem der Ansprüche 12 bis 14 mit einem Einlegeteil nach einem der Ansprüche 1 bis 11 in einem Sensorgehäuse.

## Claims

1. Insert in an injection moulding (14), in particular a fastening bush for receiving a fastening means in a receiving opening (17), with at least one outer surface (19), **characterized in that** at least the outer surface (19) has a metallic anticorrosive layer (12), on which a sealing layer (13) is deposited.

2. Insert according to Claim 1, **characterized in that** the sealing layer (13) is a silicate- or organosilicate-based layer.

3. Insert according to Claim 2, **characterized in that** the sealing layer (13) has a layer thickness of more than 0.5 µm, preferably at least 1 µm.

4. Insert according to Claim 1, **characterized in that** a lacquer layer (13') is provided at least as the sealing layer (13).

5. Insert according to one of the preceding claims, **characterized in that** the insert has a sleeve-shaped body (11), which is enclosed on its inner and outer surface (18, 19) by the anticorrosive layer (12) and the sealing layer (13).

6. Insert according to Claim 4 or 5, **characterized in that** the lacquer layer (13') is a cathodic dip coating layer.

7. Insert according to one of the preceding claims, **characterized in that** the anticorrosive layer (12) is a ZnNi layer.

8. Insert according to one of the preceding claims, **characterized in that** the anticorrosive layer (12) is a Zn layer.

9. Insert according to one of the preceding claims, **characterized in that** at least the sleeve-shaped body (11) is formed in such a way as to prevent twisting.

10. Insert according to Claim 9, **characterized in that** the sleeve-shaped body (11) has a polygonal profile in cross section.

11. Insert according to Claim 9 or 10, **characterized in that** the sleeve-shaped body (11) has a knurled profile in cross section.

12. Injection moulding with an insert (10), in particular a fastening bush for receiving a fastening means in a receiving opening (17), with at least one outer surface (18, 19), **characterized in that** the insert (10) has at least on the outer surface (19) a metallic first anticorrosive layer (12), on which a sealing layer (13) is deposited.

13. Injection moulding according to Claim 12, **characterized in that** the insert (10) coated with the anticorrosive layer (12) and the sealing layer (13) is encapsulated with at least one material from the group comprising polybutylene terephthalate, polyamide and/or glass-fibre-filled polymer.

14. Injection moulding according to Claim 12 or 13, **characterized by** a configuration as a housing (14) with an integrated fastening bush.

15. Use of an injection moulding according to one of Claims 12 to 14 with an insert according to one of Claims 1 to 11 in a sensor housing.

## Revendications

1. Insert dans une pièce moulée par injection (14), en particulier douille de fixation destinée à recevoir un moyen de fixation dans une ouverture de réception (17), avec au moins une surface extérieure (19), **caractérisé en ce qu'**au moins la surface extérieure (19) présente une couche métallique de protection contre la corrosion (12), sur laquelle une couche de colmatage (13) est déposée.

2. Insert selon la revendication 1, **caractérisé en ce que** la couche de colmatage (13) est une couche à base de silicate ou d'organosilicate.

3. Insert selon la revendication 2, **caractérisé en ce que** la couche de colmatage (13) présente une épaisseur de couche de plus de 0,5 µm, de préférence d'au moins 1 µm.

4. Insert selon la revendication 1, **caractérisé en ce qu'**il est prévu au moins une couche de laque (13') comme couche de colmatage (13).

5. Insert selon l'une quelconque des revendications précédentes, **caractérisé en ce que** l'insert présente un corps en forme de douille (11), qui est entouré sur sa surface intérieure et extérieure (18, 19) de la couche de protection contre la corrosion (12) et de la couche de colmatage (13).

6. Insert selon la revendication 4 ou 5, **caractérisé en ce que** la couche de laque (13') est une couche de laquage par immersion cathodique.

7. Insert selon l'une quelconque des revendications précédentes, **caractérisé en ce que** la couche de protection contre la corrosion (12) est une couche de ZnNi.

8. Insert selon l'une quelconque des revendications précédentes, **caractérisé en ce que** la couche de protection contre la corrosion (12) est une couche de Zn.

9. Insert selon l'une quelconque des revendications précédentes, **caractérisé en ce qu'**au moins le corps en forme de douille (11) est bloqué contre la rotation.

10. Insert selon la revendication 9, **caractérisé en ce que** le corps en forme de douille (11) présente en section transversale un profil polygonal.

11. Insert selon la revendication 9 ou 10, **caractérisé en ce que** le corps en forme de douille (11) présente en section transversale un profil moleté.

12. Pièce moulée par injection dotée d'un insert (10), en particulier d'une douille de fixation destinée à recevoir un moyen de fixation dans une ouverture de réception (17), avec au moins une surface extérieure (18, 19), **caractérisée en ce que** l'insert (10) présente au moins sur la surface extérieure (19) une première couche métallique de protection contre la corrosion (12), sur laquelle une couche de colmatage (13) est déposée.

13. Pièce moulée par injection selon la revendication 12, **caractérisée en ce que** l'insert (10) revêtu d'une couche de protection contre la corrosion (12) et d'une couche de colmatage (13) est enrobé par projection avec au moins un matériau du groupe polybutylène téréphtalate, polyamide et/ou polymère renforcé de fibres de verre.

14. Pièce moulée par injection selon la revendication 12 ou 13, **caractérisée par** une configuration en forme de boîtier (14) avec une douille de fixation intégrée.

15. Utilisation d'une pièce moulée par injection selon l'une quelconque des revendications 12 à 14 dotée d'un insert selon l'une quelconque des revendications 1 à 11 dans un boîtier de détecteur.
